# EUROPEAN PATENT APPLICATION

(11) **EP 4 455 871 A1**
(43) Date of publication of application: **30.10.2024**
(21) Application number: 22909715.9
(22) Date of filing: 05.12.2022
(51) Int. Cl.: G06F 9/38

(54) **VECTOR OPERATION METHOD, VECTOR OPERATOR, ELECTRONIC DEVICE AND STORAGE MEDIUM**

(30) Priority: 20.12.2021 CN 202111562099
(71) Applicant: SANECHIPS TECHNOLOGY CO., LTD., Shenzhen, Guangdong 518055 (CN)
(72) Inventor: LEI, Hong, Shenzhen, Guangdong 518057 (CN); ZHEN, Degen, Shenzhen, Guangdong 518057 (CN); WU, Tongqing, Shenzhen, Guangdong 518057 (CN); KONG, Dehui, Shenzhen, Guangdong 518057 (CN); XU, Ke, Shenzhen, Guangdong 518057 (CN)
(74) Representative: Ipsilon
(86) International application number: PCT/CN2022/136440
(87) International publication number: WO 2023/116400

(57) **Abstract**

There are provided a vector operation method, a vector operator, an electronic device, and a computer-readable storage medium. The vector operation method includes: splitting a target vector operation to be performed to determine a plurality of basic operations in a predetermined execution order; sequentially generating, according to the predetermined execution order, a plurality of basic operation instructions corresponding to the plurality of basic operations; and sequentially executing, according to the predetermined execution order, the plurality of basic operation instructions on initial data to be subjected to the target vector operation, so as to implement the target vector operation on the initial data, wherein in two adjacent basic operations, to-be-calculated data for a latter basic operation is an operation result of a former basic operation.

## Description

### TECHNICAL FIELD

The present disclosure relates to the field of computer technology, and in particular, to a vector operation method, a vector operator, an electronic device, and a computer-readable storage medium.

### BACKGROUND

A neural network accelerator is usually used when a network layer (e.g., a pooling layer) of a neural network performs operations. In the related technology, the neural network accelerator adopts a direct mapping method for accelerating the operations of the neural network, that is, a dedicated processing circuit with specific function is involved to perform hardware acceleration on the operations of the network layer.

However, performing hardware acceleration on the operations of the network layer with the above method is low in flexibility.

### SUMMARY

Embodiments of the present disclosure provide a vector operation method, a vector operator, an electronic device, and a computer-readable storage medium.

In a first aspect of the present disclosure, there is provided a vector operation method, including: splitting a target vector operation to be performed to determine a plurality of basic operations in a predetermined execution order; sequentially generating, according to the predetermined execution order, a plurality of basic operation instructions corresponding to the plurality of basic operations; and sequentially executing, according to the predetermined execution order, the plurality of basic operation instructions on initial data to be subjected to the target vector operation, so as to implement the target vector operation on the initial data, wherein in two adjacent basic operations, to-be-calculated data for a latter basic operation is an operation result of a former basic operation.

In a second aspect of the present disclosure, there is provided a vector operator, including: a splitting module configured to split a target vector operation to be performed to determine a plurality of basic operations in a predetermined execution order; an instruction generation module configured to sequentially generate, according to the predetermined execution order, a plurality of basic operation instructions corresponding to the plurality of basic operations; and at least one operation module configured to sequentially execute, according to the predetermined execution order, the plurality of basic operation instructions on initial data to be subjected to the target vector operation, so as to implement the target vector operation on the initial data, wherein in two adjacent basic operations, to-be-calculated data for a latter basic operation is an operation result of a former basic operation.

In a third aspect of the present disclosure, there is provided an electronic device, including: a storage module having an executable program stored thereon; and one or more processing modules which, when calling the executable program, is capable of implementing the vector operation method provided in the first aspect of the present disclosure.

In a fourth aspect of the present disclosure, there is provided a computer-readable storage medium having an executable program stored thereon, and when the executable program is called by a processor, the processor is capable of implementing the vector operation method provided in the first aspect of the present disclosure.

### BRIEF DESCRIPTION OF DRAWINGS

FIG. 1 is a flowchart illustrating an implementation of a vector operation method according to the present disclosure;
FIG. 2 is a flowchart illustrating an implementation of operation S130 in a vector operation method according to the present disclosure;
FIG. 3 is a flowchart illustrating another implementation of a vector operation method according to the present disclosure;
FIG. 4 is a flowchart illustrating an implementation of operation S120 in a vector operation method according to the present disclosure;
FIG. 5 is a flowchart illustrating still another implementation of a vector operation method according to the present disclosure;
FIG. 6 is a schematic diagram of pipeline operation of vector operations according to the present disclosure;
FIG. 7 is a schematic diagram illustrating performing a ReLU activation operation with a vector operation method according to the present disclosure;
FIG. 8 is a block diagram illustrating an implementation of a vector operator according to the present disclosure;
FIG. 9 is a schematic diagram of an instruction generation module in a vector operator according to the present disclosure;
FIG. 10 is a block diagram illustrating another implementation of a vector operator according to the present disclosure; and
FIG. 11 is a schematic diagram of a plurality of operation modules in a vector operator according to the present disclosure.

### DETAIL DESCRIPTION OF EMBODIMENTS

In order to enable those of ordinary skill in the art to better understand the technical solutions of the present disclosure, a vector operation method, a vector operator, an electronic device, and a computer-readable storage medium provided by the present disclosure are described in detail below with reference to the accompanying drawings.

Exemplary embodiments of the present disclosure will be described more fully below with reference to the drawings, but the exemplary embodiments described herein may be embodied in different forms and should not be interpreted as being limited to embodiments described herein. Rather, the embodiments are provided to make the present disclosure thorough and complete, and are intended to enable those of ordinary skill in the art to fully understand the scope of the present disclosure.

The embodiments of the present disclosure and the features therein may be combined with each other if no conflict is incurred.

The term "and/or" used herein includes one associated listed item or any and all combinations of more than one associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of' used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

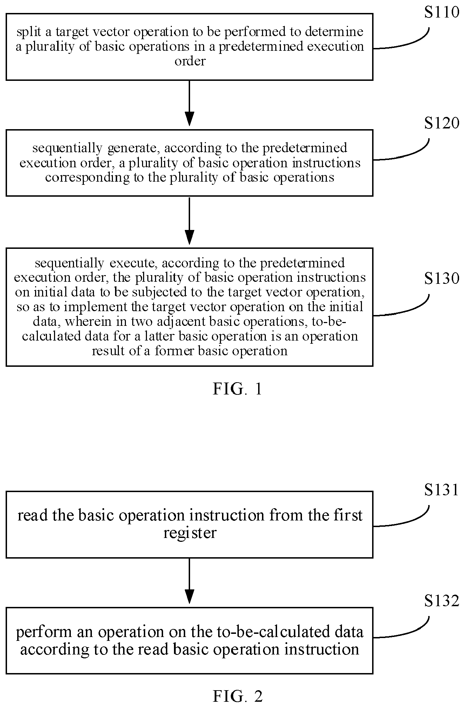

In a first aspect of the present disclosure, there is provided a vector operation method. As shown in FIG. 1, the vector operation method includes operations S110 to S130.

At operation S110, splitting a target vector operation to be performed to determine a plurality of basic operations in a predetermined execution order.

At operation S120, sequentially generating, according to the predetermined execution order, a plurality of basic operation instructions corresponding to the plurality of basic operations.

At operation S130, sequentially executing, according to the predetermined execution order, the plurality of basic operation instructions on initial data to be subjected to the target vector operation, so as to implement the target vector operation on the initial data.

In two adjacent basic operations, to-be-calculated data for a latter basic operation is an operation result of a former basic operation.

In the present disclosure, the basic operations may include an addition operation, a subtraction operation, a multiplication operation, a division operation, shifting, looking up tables, comparing sizes, etc., but certainly the present disclosure is not limited thereto. A complex vector operation can be implemented by combining various basic operations.

When the vector operation method according to the present disclosure is used for performing vector operations in Artificial Intelligence (AI) accelerators, a target vector operation may be split, and then a plurality of basic operation instructions may be sequentially executed on initial data, thus implementing the target vector operation. That is, various different target vector operations can be performed with the vector operation method provided by the present disclosure. Compared with the related technology in which "different target vector operations are corresponding to different accelerators", the vector operation method provided by the present disclosure is more flexible.

For example, a target vector operation A may be split into a basic operation a and a basic operation b. In order to implement the target vector operation A, the target vector operation A may be split according to the vector operation method provided by the present disclosure to determine the basic operation a and the basic operation b which are performed in sequence, and then a basic operation instruction a' for the basic operation a and a basic operation instruction b' for the basic operation b are sequentially generated; and the basic operation instruction a' is executed on initial data to obtain an operation result serving as the to-be-calculated data for the basic operation b, and then the basic operation instruction b' is executed on the to-be-calculated data to obtain a final operation result.

In the other example, a target vector operation B may be split into a basic operation a and a basic operation c. In order to implement the target vector operation B, the target vector operation B may be split according to the vector operation method provided by the present disclosure to determine the basic operation a and the basic operation c which are performed in sequence, and then a basic operation instruction a' for the basic operation a and a basic operation instruction c' for the basic operation c are sequentially generated; and the basic operation instruction a' is executed on initial data to obtain an operation result serving as the to-be-calculated data for the basic operation c, and then the basic operation instruction c' is executed on the to-be-calculated data to obtain a final operation result.

As can be seen from the above two examples, different target vector operations can be performed with the vector operation method provided by the present disclosure.

In order to improve operation efficiency, optionally, in the operation of sequentially generating, according to the predetermined execution order, the plurality of basic operation instructions corresponding to the plurality of basic operations (i.e., operation S120), the generated basic operation instruction is stored in a first register after each basic operation instruction is generated.

Accordingly, as shown in FIG. 2, at operation S130, execution of each basic operation instruction may include operations S131 and S132.

At operation S131, reading the basic operation instruction from the first register.

At operation S132, performing an operation on the to-be-calculated data according to the read basic operation instruction.

In the present disclosure, execution of each basic operation instruction may be regarded as one cycle, that is, operation S130 may include operation S131 and operation S132 which are performed periodically until all the basic operation instructions are executed.

In an alternative implementation, a next basic operation instruction is written to the first register merely in a case the basic operation instruction in the first register is read and called.

An operation of generating each basic operation instruction and an operation of executing each basic operation instruction are not particularly limited in the present disclosure.

In order to improve the operation efficiency, optionally, an operation of generating an i^{th} basic operation instruction and an operation of executing a j^{th} basic operation instruction are performed synchronously, both i and j denote sequence numbers and are positive integers, and i > j. That is, the operation of generating the basic operation instruction is parallel to the operation of executing the basic operation instruction.

For example, an operation of performing an operation on the to-be-calculated data according to a first basic operation instruction may be performed while generating a second basic operation instruction.

Certainly, the present disclosure is not limited to the above.

In order to improve the operation efficiency, for different initial data, the operation of sequentially executing, according to the predetermined execution order, the plurality of basic operation instructions on the initial data to be subjected to the target vector operation so as to implement the target vector operation on the initial data (i.e., operation S130) is performed concurrently.

For example, in a case where a target vector operation A is performed on initial data 1 and a target vector operation B is performed on initial data 2, after the target vector operation A is split into a basic operation a and a basic operation b and the target vector operation B is split into a basic operation a and a basic operation c, performing the basic operation a on the initial data 1 to obtain data 1' and performing the basic operation a on the initial data 2 to obtain data 2' may be carried out synchronously, and then performing the basic operation b on the data 1' and performing the basic operation c on the data 2' may be carried out synchronously.

In the present disclosure, execution of each operation S130 may be regarded as one cycle, and the vector operation method provided by the present disclosure may also be regarded as a multi-cycle multi-stage pipeline handshaking operation method and can support operations in a neural network. The accelerators in the related technology depend on a single-cycle multi-stage pipeline, and cannot support the operations in the neural network.

In order to further increase an operation rate, optionally, the to-be-calculated data for each basic operation is written to a buffer. When a basic operation is performed, merely the corresponding to-be-calculated data needs to be read from the buffer.

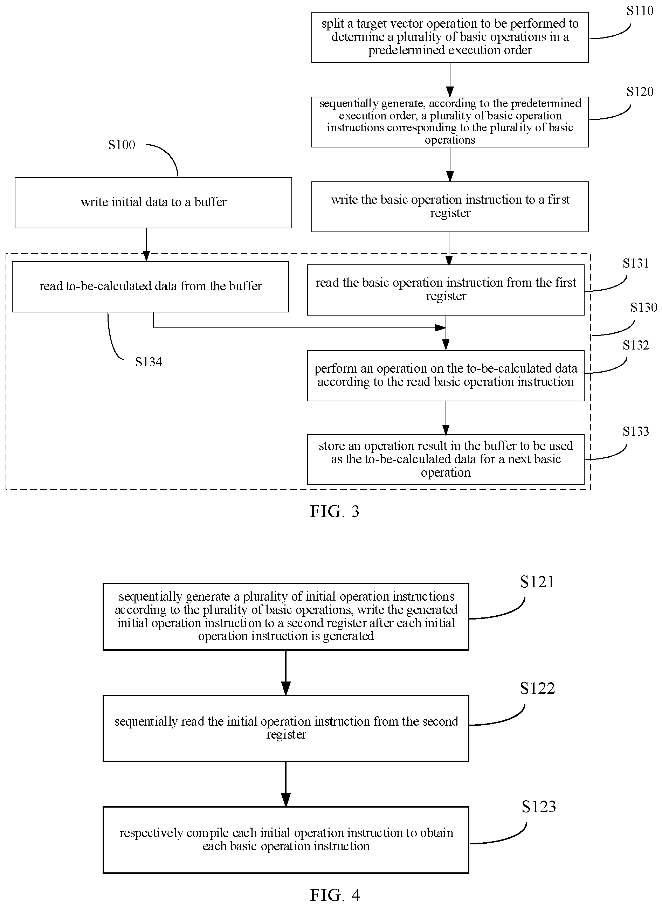

It should be readily understood that the initial data is the to-be-calculated data for the first basic operation. Therefore, as shown in FIG. 3, the vector operation method according to the present disclosure may further include operation S100.

At operation S100, writing the initial data to a buffer.

Accordingly, as shown in FIG. 3, before a last basic operation is performed, operation S130 further includes operations S133 and S134 each time a basic operation instruction is executed.

At operation S133, storing an operation result in the buffer to be used as the to-be-calculated data for a next basic operation.

At operation S134, reading the to-be-calculated data from the buffer.

In order to improve the operation efficiency, optionally, as shown in FIG. 4, the operation S120 may include operations S121 to S123.

At operation S121, sequentially generating a plurality of initial operation instructions according to the plurality of basic operations, and writing the generated initial operation instruction to a second register after each initial operation instruction is generated.

At operation S122, sequentially reading the initial operation instruction from the second register.

At operation S123, respectively compiling each initial operation instruction to obtain each basic operation instruction.

In an alternative implementation, the first register and the second register are both pipeline registers, so that operation S122 may be implemented through handshaking of the first register and the second register.

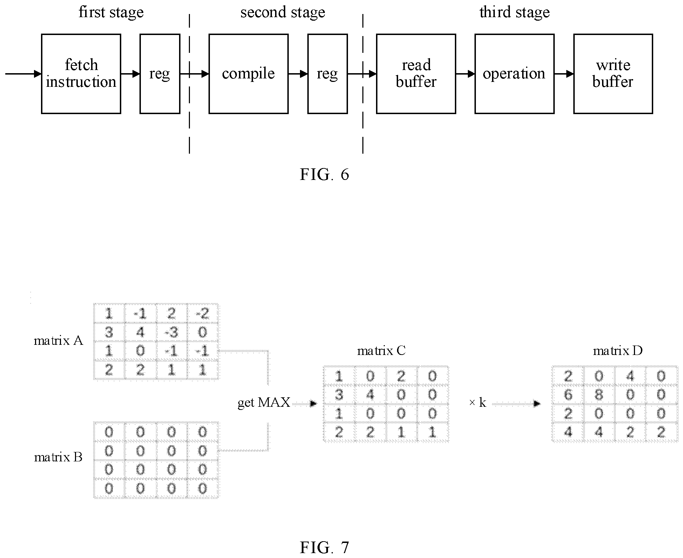

FIG. 6 is a schematic diagram of pipeline operation of vector operations according to the present disclosure, and illustrates operation S120 and operation S130 in the vector operation method provided by the present disclosure. As shown in FIG. 6, operation S120 and operation S130 form a three-stage pipeline.

In a first stage of the pipeline, "fetch instruction" refers to acquiring the initial operation instruction generated at operation S121, and "reg" after "fetch instruction" refers to writing the initial operation instruction to the second register. In a second stage of the pipeline, "compile" refers to operation S123, and "reg" after "compile" refers to writing the basic operation instruction to the first register. In a third stage of the pipeline, "read buffer" refers to reading the to-be-calculated data from the buffer, i.e., operation S134, "operation" refers to performing operation on the to-be-calculated data according to the basic operation instruction, i.e., operation S132, and "write buffer" refers to writing the operation result to the buffer, i.e., operation S133.

In the related technology, one operation module generally merely supports operations of data in a same format. For example, an operation module supporting a 12-bit data format can merely perform operations on data in the 12-bit data format.

In order to save computing resources, the present disclosure proposes a technical solution of "operation module multiplexing".

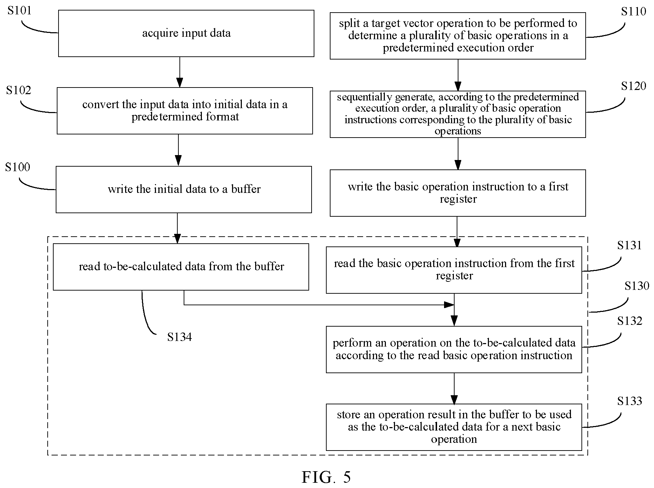

The initial data is in a predetermined format. As shown in FIG. 5, before sequentially executing, according to the predetermined execution order, the plurality of basic operation instructions on the initial data to be subjected to the target vector operation so as to implement the target vector operation on the initial data (that is, before operation S130), the vector operation method according to the present disclosure further includes operations S101 and S102.

At operation S101, acquiring input data.

At operation S102, converting the input data into the initial data in the predetermined format.

Through the operations S101 and S102, the initial data in the predetermined format can be obtained regardless of a format of the input data.

In the present disclosure, an operation module (e.g., an adder or a multiplier) for executing a base operation instruction can be used for data of different precision types. That is, data of a plurality of different precision types can be processed through operations S101 and S102, with no need to design a dedicated operation module for the data of each different precision type.

For example, the predetermined format is a 12-bit data format.

In a case where a data type of the input data is FP16, in the operation of converting the input data into the initial data in the predetermined format (i.e., operation S 102), the input data is converted into the initial data including an exponent bit, a 1-bit sign bit, and 11-bit precision bits.

In a case where the data type of the input data is INT8, in the operation of converting the input data into the initial data in the predetermined format (i.e., operation S102), the input data is converted into the initial data including 5-bit sign bits and 7-bit true-form precision bits.

In a case where the data type of the input data is INT12, in the operation of converting the input data into the initial data in the predetermined format (i.e., operation S102), the input data is converted into the initial data including a 1-bit sign bit and 11-bit precision bits.

In the present disclosure, a specific type of the target vector operation is not particularly limited, and how to split the target vector operation is not particularly limited either. Operation 5110 is specifically described below by taking the target vector operation being a ReLU activation operation as an example.

In a case where the target vector operation is the ReLU activation operation, the ReLU activation operation may be split into a "size-comparison basic operation" and a "multiplication basic operation" which are performed in sequence. Specifically, for the ReLU activation operation, the initial data is matrix data, and the basic operations in the predetermined execution order are respectively the size-comparison basic operation for comparing the initial data with a reference matrix to obtain maximum values, with a feature map of the reference matrix being the same as that of the initial data and each element of the reference matrix being 0; and the multiplication basic operation for multiplying each element point of the to-be-calculated data by a coefficient K.

The splitting method for the ReLU activation operation is briefly described below with reference to FIG. 7. As shown in FIG. 7, the initial data is a matrix A having a 4*4 feature map.

The ReLU activation operation is split into the size-comparison basic operation and the multiplication basic operation. In the size-comparison basic operation, the matrix A is compared with a reference matrix B to obtain maximum values, and an intermediate matrix C is obtained after the size-comparison basic operation is performed on the matrix A. In the multiplication basic operation, each element point in the intermediate matrix C is multiplied by the coefficient K to obtain an output matrix D. The output matrix D is a result of the ReLU activation operation on the matrix A.

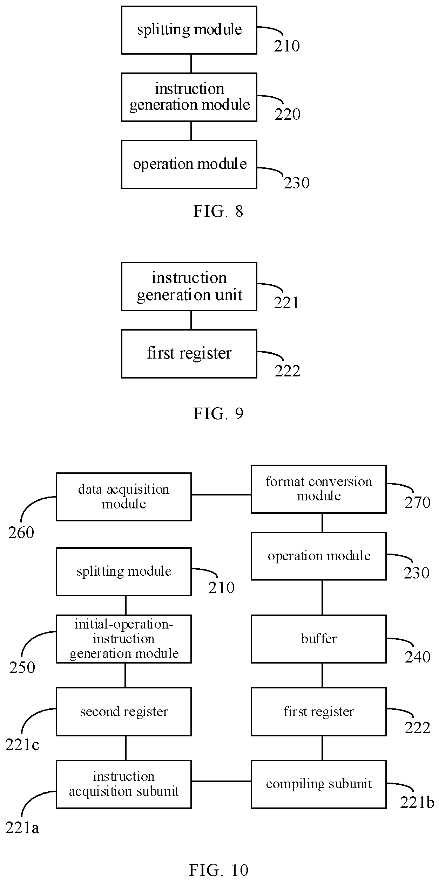

In a second aspect of the present disclosure, there is provided a vector operator. As shown in FIG. 8, the vector operator according to the present disclosure includes a splitting module 210, an instruction generation module 220, and an operation module 230.

The vector operator provided by the present disclosure is configured to perform the vector operation method provided in first aspect of the present disclosure. Specifically, the splitting module 210 is configured to perform operation S110, that is, the splitting module 210 is configured to split a target vector operation to be performed to determine a plurality of basic operations in a predetermined execution order; the instruction generation module 220 is configured to perform operation S120, that is, the instruction generation module 220 is configured to sequentially generate, according to the predetermined execution order, a plurality of basic operation instructions corresponding to the plurality of basic operations; the operation module 230 is configured to perform operation S130, that is, the operation module 230 is configured to sequentially execute, according to the predetermined execution order, the plurality of basic operation instructions on initial data to be subjected to the target vector operation, so as to implement the target vector operation on the initial data, wherein in two adjacent basic operations, to-be-calculated data for a latter basic operation is an operation result of a former basic operation.

When the vector operator provided by the present disclosure is used to perform a complex target vector operation, the target vector operation is first split into a plurality of basic operations, and then the basic operations are sequentially performed on initial data, thus implementing the target vector operation. The vector operator provided by the present disclosure can perform various different complex vector operations and has high flexibility.

In order to improve operation efficiency, in an alternative implementation, as shown in FIG. 9, the instruction generation module 220 may include an instruction generation unit 221 and a first register 222. The instruction generation unit 221 is configured to generate the basic operation instructions, and write the generated basic operation instruction to the first register 222 after each basic operation instruction is generated.

The operation module 230 is configured to read the basic operation instruction from the first register 222, and perform an operation on the to-be-calculated data according to the read basic operation instruction.

In order to further improve the operation efficiency, different modules may operate concurrently. For example, generating an i^{th} basic operation instruction by the instruction generation unit 221 and executing a j^{th} basic operation instruction by the operation module 230 are carried out synchronously, both i and j denote sequence numbers and are positive integers, and i > j.

In order to further improve the operation efficiency, optionally, as shown in FIG. 10, the vector operator provided by the present disclosure further includes a buffer 240, which is configured to store the initial data to be used as the to-be-calculated data for a first basic operation.

In addition, the operation module 230 is further configured to store, before performing a last basic operation, an operation result obtained by execution of each basic operation instruction in the buffer 240 to be used as the to-be-calculated data for a next basic operation. The operation module 230 is further configured to read the to-be-calculated data from the buffer 240 before performing an operation on the to-be-calculated data according to the read basic operation instruction.

Optionally, as shown in FIG. 10, the vector operator provided by the present disclosure further includes an initial-operation-instruction generation module 250, and the instruction generation unit 221 may include an instruction acquisition subunit 221a, a compiling subunit 221b, and a second register 221c.

The initial-operation-instruction generation module 250 is configured to sequentially generate a plurality of initial operation instructions according to the plurality of basic operations, and write the generated initial operation instruction to the second register 221c after each initial operation instruction is generated.

The instruction acquisition subunit 221a is configured to sequentially read the initial operation instruction from the second register 221c. The compiling subunit 221b is configured to respectively compile each initial operation instruction to obtain each corresponding basic operation instruction, and sequentially write the basic operation instruction to the first register 222.

In an alternative implementation, the first register 222 and the second register 221c are both pipeline registers, and the initial operation instruction is read from the second register 221c through handshaking of the first register 222 and the second register 221c.

As stated above, in order to improve the operation efficiency, optionally, generating the i^{th} basic operation instruction by the instruction generation unit 221 and executing the j^{th} basic operation instruction by the operation module 230 are carried out synchronously, both i and j denote sequence numbers and are positive integers, and i > j.

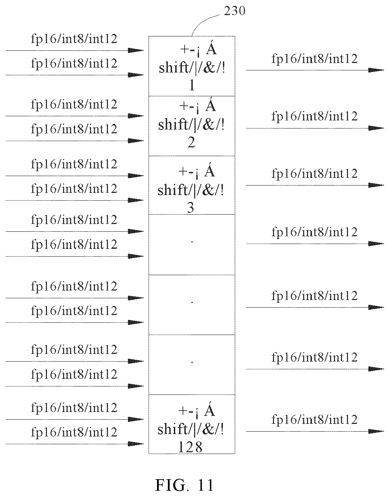

In another alternative implementation, as shown in FIG. 11, the vector operator provided by the present disclosure includes a plurality of operation modules 230 capable of operating concurrently. In order to improve the operation efficiency, for different initial data, the plurality of operation modules 230 may be called simultaneously to perform operation S130 concurrently.

In the present disclosure, execution of each operation S130 may be regarded as one cycle, and the vector operation method provided by the present disclosure may also be regarded as a multi-cycle multi-stage pipeline handshaking operation method and can support the operations in the neural network. The accelerators in the related technology depend on the single-cycle multi-stage pipeline, and cannot support the operations in the neural network. Moreover, the plurality of basic operation instructions may be executed in the plurality of operation modules at the same time, which can improve the operation efficiency.

A specific structure and a specific type of each operation module are not particularly limited in the present disclosure. For example, inputting two pieces of 16-bit data to an operation module may output one piece of 16-bit data.

Optionally, the vector operator provided by the present disclosure further includes a data acquisition module 260 and a format conversion module 270. The data acquisition module 260 is configured to acquire input data; and the format conversion module 270 is configured to convert the input data into the initial data in a predetermined format.

In an alternative implementation, the predetermined format is a 12-bit data format.

In a case where a data type of the input data is FP16, the format conversion module 270 may convert the input data into the initial data including an exponent bit, a 1-bit sign bit, and 11-bit precision bits.

In a case where the data type of the input data is INT8, the format conversion module 270 may convert the input data into the initial data including 5-bit sign bits and 7-bit true-form precision bits.

In a case where the data type of the input data is INT12, the format conversion module 270 may convert the input data into the initial data including a 1-bit sign bit and 11-bit precision bits.

In an implementation involving 128 operation modules 230 which is illustrated by FIG. 11, the operation modules 230 support performing operations on data of three precision types, namely FP16, INT8, and INT12.

Optionally, the target vector operation includes a ReLU activation operation, and the initial data is matrix data. The splitting module 210 is configured to split the ReLU activation operation into the following basic operations in the predetermined execution order: a size-comparison basic operation for comparing the initial data with a reference matrix to obtain maximum values, with a feature map of the reference matrix being the same as that of the initial data and each element of the reference matrix being 0; and a multiplication basic operation for multiplying each element point of the to-be-calculated data by a coefficient K.

In a third aspect of the present disclosure, there is provided an electronic device, including: a storage module having an executable program stored thereon; and one or more processing modules which, when calling the executable program, may implement the vector operation method provided in the first aspect of the present disclosure.

In a fourth aspect of the present disclosure, there is provided a computer-readable storage medium having an executable program stored thereon. When the executable program is called by a processor, the processor may implement the vector operation method provided in the first aspect of the present disclosure.

It should be understood by those of ordinary skill in the art that the functional modules/units in all or some of the operations, systems, and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A vector operation method, comprising:
splitting a target vector operation to be performed to determine a plurality of basic operations in a predetermined execution order;
sequentially generating, according to the predetermined execution order, a plurality of basic operation instructions corresponding to the plurality of basic operations; and
sequentially executing, according to the predetermined execution order, the plurality of basic operation instructions on initial data to be subjected to the target vector operation, so as to implement the target vector operation on the initial data,
wherein to-be-calculated data for a latter basic operation of two adjacent basic operations is an operation result of a former basic operation of the two adjacent basic operations.

2. The vector operation method of claim 1, wherein sequentially generating, according to the predetermined execution order, the plurality of basic operation instructions corresponding to the plurality of basic operations comprises:
storing the generated basic operation instruction in a first register after each basic operation instruction is generated,
in the operation of sequentially executing, according to the predetermined execution order, the plurality of basic operation instructions on the initial data to be subjected to the target vector operation so as to implement the target vector operation on the initial data, execution of each basic operation instruction comprises:
reading the basic operation instruction from the first register; and
performing an operation on the to-be-calculated data according to the read basic operation instruction.

3. The vector operation method of claim 2, wherein an operation of generating an i^{th} basic operation instruction and an operation of executing a j^{th} basic operation instruction are performed synchronously, wherein both i and j denote sequence numbers and are positive integers, and i > j; and/or,
for different initial data, the operation of sequentially executing, according to the predetermined execution order, the plurality of basic operation instructions on the initial data to be subjected to the target vector operation so as to implement the target vector operation on the initial data is performed concurrently.

4. The vector operation method of claim 2, wherein before splitting the target vector operation to be performed to determine the plurality of basic operations in the predetermined execution order, the vector operation method further comprises:
writing the initial data to a buffer to be used as the to-be-calculated data for a first basic operation,
before performing a last basic operation, execution of each basic operation instruction further comprises:
storing an operation result in the buffer to be used as the to-be-calculated data for a next basic operation, and
before performed the operation on the to-be-calculated data according to the read basic operation instruction, execution of each basic operation instruction further comprises:
reading the to-be-calculated data from the buffer.

5. The vector operation method of claim 4, wherein sequentially generating, according to the predetermined execution order, the plurality of basic operation instructions corresponding to the plurality of the basic operations comprises:
sequentially generating a plurality of initial operation instructions according to the plurality of basic operations, wherein the generated initial operation instruction is written to a second register after each initial operation instruction is generated;
sequentially reading the initial operation instruction from the second register; and
respectively compiling each initial operation instruction to obtain each corresponding basic operation instruction.

6. The vector operation method of claim 5, wherein the first register and the second register are both pipeline registers, and the operation of reading the initial operation instruction from the second register is implemented through handshaking of the first register and the second register.

7. The vector operation method of any one of claims 1 to 6, wherein the initial data is in a predetermined format, and before sequentially executing, according to the predetermined execution order, the plurality of the basic operation instructions on the initial data to be subjected to the target vector operation so as to implement the target vector operation on the initial data, the vector operation method further comprises:
acquiring input data; and
converting the input data into the initial data in the predetermined format.

8. The vector operation method of claim 7, wherein the predetermined format is a 12-bit data format,
in a case where a data type of the input data is FP16, converting the input data into the initial data in the predetermined format comprises: converting the input data into the initial data comprising an exponent bit, a 1-bit sign bit, and 11-bit precision bits;
in a case where the data type of the input data is INT8, converting the input data into the initial data in the predetermined format comprises: converting the input data into the initial data comprising 5-bit sign bits and 7-bit true-form precision bits; and
in a case where the data type of the input data is INT12, converting the input data into the initial data in the predetermined format comprises: converting the input data into the initial data comprising a 1-bit sign bit and 11-bit precision bits.

9. The vector operation method of any one of claims 1 to 6, wherein the target vector operation comprises a ReLU activation operation, and the initial data is matrix data,
in the operation of splitting the target vector operation to be performed to determine the plurality of basic operations in the predetermined execution order, the basic operations in the predetermined execution order are respectively:
a size-comparison basic operation, wherein the initial data is compared with a reference matrix to obtain maximum values, a feature map of the reference matrix is the same as a feature map of the initial data, and each element of the reference matrix is 0; and
a multiplication basic operation, wherein each element point of the to-be-calculated data is multiplied by a coefficient K.

10. A vector operator, comprising:
a splitting module configured to split a target vector operation to be performed to determine a plurality of basic operations in a predetermined execution order;
an instruction generation module configured to sequentially generate, according to the predetermined execution order, a plurality of basic operation instructions corresponding to the plurality of basic operations; and
at least one operation module configured to sequentially execute, according to the predetermined execution order, the plurality of basic operation instructions on initial data to be subjected to the target vector operation, so as to implement the target vector operation on the initial data,
wherein to-be-calculated data for a latter basic operation of two adjacent basic operations is an operation result of a former basic operation of the two adjacent basic operations.

11. The vector operator of claim 10, wherein the instruction generation module comprises an instruction generation unit and a first register,
the instruction generation unit is configured to generate the basic operation instructions, and write the generated basic operation instruction to the first register after each basic operation instruction is generated; and
the at least one operation module is configured to:
read the basic operation instruction from the first register, and perform an operation on the to-be-calculated data according to the read basic operation instruction.

12. The vector operator of claim 11, wherein generating an i^{th} basic operation instruction by the instruction generation unit and executing a j^{th} basic operation instruction by the operation module are carried out synchronously, wherein both i and j denote sequence numbers and are positive integers, and i > j; and/or,
the vector operator comprises a plurality of operation modules that operate concurrently.

13. The vector operator of claim 11, further comprising a buffer configured to store the initial data to be used as the to-be-calculated data for a first basic operation,
before performing a last basic operation, the operation module is further configured to store an operation result obtained by execution of each basic operation instruction in the buffer to be used as the to-be-calculated data for a next basic operation; and
before performing the operation on the to-be-calculated data according to the read basic operation instruction, the operation module is further configured to read the to-be-calculated data from the buffer.

14. The vector operator of claim 11, further comprising an initial-operation-instruction generation module, and the instruction generation unit comprising an instruction acquisition subunit, a compiling subunit, and a second register,
the initial-operation-instruction generation module is configured to sequentially generate a plurality of initial operation instructions according to the plurality of basic operations, wherein the initial-operation-instruction generation module writes the generated initial operation instruction to the second register after each initial operation instruction is generated;
the instruction acquisition subunit is configured to sequentially read the initial operation instruction from the second register; and
the compiling subunit is configured to respectively compile each initial operation instruction to obtain each corresponding basic operation instruction, and sequentially write the basic operation instruction to the first register.

15. The vector operator of claim 14, wherein the first register and the second register are both pipeline registers, and the instruction acquisition subunit reads the initial operation instruction from the second register through handshaking of the first register and the second register.

16. The vector operator of any one of claims 10 to 15, further comprising:
a data acquisition module configured to acquire input data; and
a format conversion module configured to convert the input data into the initial data in a predetermined format.

17. The vector operator of claim 16, wherein the predetermined format is a 12-bit data format,
in a case where a data type of the input data is FP16, the format conversion module converts the input data into the initial data comprising an exponent bit, a 1-bit sign bit, and 11-bit precision bits;
in a case where the data type of the input data is INT8, the format conversion module converts the input data into the initial data comprising 5-bit sign bits and 7-bit true-form precision bits; and
in a case where the data type of the input data is INT12, the format conversion module converts the input data into the initial data comprising a 1-bit sign bit and 11-bit precision bits.

18. The vector operator of any one of claims 10 to 15, wherein the target vector operation comprises a ReLU activation operation, and the initial data is matrix data,
the splitting module is configured to split the ReLU activation operation into the following basic operations in the predetermined execution order:
a size-comparison basic operation, wherein the initial data is compared with a reference matrix to obtain maximum values, a feature map of the reference matrix is the same as a feature map of the initial data, and each element of the reference matrix is 0; and
a multiplication basic operation, wherein each element point of the to-be-calculated data is multiplied by a coefficient K.

19. An electronic device, comprising:
a storage module having an executable program stored thereon; and
one or more processing modules which, when calling the executable program, is capable of implementing the vector operation method of any one of claims 1 to 9.

20. A computer-readable storage medium having an executable program stored thereon, wherein when the executable program is called by a processor, the processor is capable of implementing the vector operation method of any one of claims 1 to 9.
